# EUROPEAN PATENT APPLICATION

(11) **EP 4 714 985 A1**
(43) Date of publication of application: **25.03.2026**
(21) Application number: 24201360.5
(22) Date of filing: 19.09.2024
(51) Int. Cl.: C08F 2/48

(54) **DUAL CURE RESIN COMPOSITION**

(71) Applicant: Henkel AG & Co. KGaA, 40589 Düsseldorf (DE)
(72) Inventor: Chen, Chunfu, Kanagawa Prefecture, 211-0067 (JP)

(57) **Abstract**

A composition comprising:
a) an ethylenically unsaturated monomer constituent comprising:
a1) at least one (meth)acrylate-functionalized macromonomer having a weight average molecular weight (Mw) of from 1000 to 100000 daltons; and,
a2) at least one monomer having at least two ethylenically unsaturated groups and having a weight average molecular weight (Mw) of at most 600 Daltons; and,

b) at least one ester peroxide in accordance with Formula P1, wherein: R^{p} is C₁-C₁₂ alkyl, C₆-C₁₈ aryl, C₇-C₁₈ aralkyl or C₇-C₁₈ alkaryl.

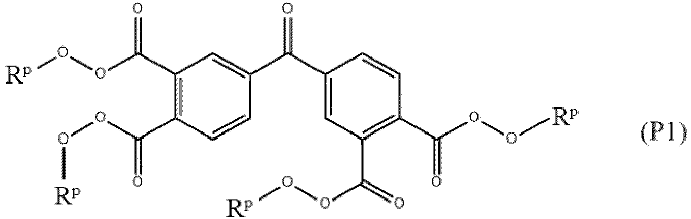

## Description

### FIELD OF THE INVENTION

The present disclosure is directed to a composition comprising: a) an ethylenically unsaturated monomer constituent, said constituent comprising: a1) at least one (meth)acrylate-functionalized macromonomer having a weight average molecular weight (Mw) of from 1000 to 100000 daltons; and, a2) at least one monomer having at least two ethylenically unsaturated groups and having a weight average molecular weight (Mw) of at most 600 Daltons; and, b) at least one ester peroxide.

### BACKGROUND TO THE INVENTION

Compositions which are curable by actinic radiation may be cured relatively quickly by exposure to a radiation source, typically ultraviolet light. Such fast cure permits manufacturers to increase throughput when using those compositions for *inter alia* coating, sealant or adhesive applications or in forming composite structures.

Problematically, given that substrates to which such compositions may be applied can, in certain circumstances, possess either irregular or contoured surfaces, the compositions may suffer from a phenomenon whereby volumes of the composition which cannot easily be exposed to actinic radiation due to said irregularities or contours remain uncured. Similarly, where compositions are applied in laminar structures, curing actinic radiation may, in certain circumstances, be poorly transmitted through one or more substrates such that the compositions cannot be cured completely. Incomplete curing of compositions may promote issues such as corrosion, aging fatigue or peeling at the edges of bonded structures.

U.S. Patent No. 4,424,252 (Nativi) describes this problem of "*shadow cure*" and proposes the remedial use of dual cure resins. The described resins cure by two mechanisms: a) exposure to ultraviolet light; and, b) curing by atmospheric moisture. More particularly, atmospheric moisture reacts with free isocyanate groups in the dual cure resin to form an amine group, which group reacts with other isocyanate groups to form a polyurea.

Compositions based on dual-curing polyurethane resins typically possess a relatively high viscosity. This can be disadvantageous to the use of such compositions in conformal coatings where flowability around irregularities or contours of a substrate surface is required to achieve an even coating. Whilst reactive or non-reactive diluents may be added to dual-cure polyurethane compositions to lower their viscosity, this can be detrimental to the efficacy of the moisture cure mechanism thereof, which in turn results in a coating with insufficient hardness and / or solvent resistance in shadow areas.

Certain authors have proposed alternatives to dual cure resins based on polyurethane. For example, US Patent No. 4,605,465 A (Morgan) discloses a UV and thermally curable composition consisting of: i) a liquid, ethylenically unsaturated monomer, oligomer or prepolymer; ii) a thermal initiator for (i) selected from the group consisting of azo compounds, thiurams, organic peroxides and mixtures thereof; iii) a photoinitiator for (i) selected from the group consisting of aldehyde and ketone carbonyl compounds having at least one aromatic nucleus, benzoin alkyl ethers, diethoxyacetophenone and 2,2-dimethoxy-2-phenylacetophenone; iv) a thermoplastic material; and, v) a non-polymerizable plasticizer for (iv).

Further US Patent No. 10,174,146 B2 (Morin et al.) discloses a method which comprises: a) mixing at least one polymerizable acrylic compound, a thermal initiator, a photoinitiator, and a peroxide to form a mixture, wherein the peroxide has a decomposition temperature; b) exposing the mixture to light having a wavelength between 220 nm to 600 nm and an intensity of between 5 mW/cm² and 10 W/cm² for a sufficient first time to generate a first curing agent; and, c) after exposing the mixture to light, exposing the mixture to a temperature below the decomposition temperature of the peroxide for a sufficient second time to generate a second curing agent.

The compositions of these citations which are based on polymerizable acrylic compounds are complex, require multiplicity of different initiating constituents in order to facilitate dual curing: this limits the formulation space of the composition which may be utilized to fine tune the compositional properties for particular applications. Further, it is considered that the compositions may not be facilely cured under either actinic irradiation or thermal treatment when applied independently.

### STATEMENT OF THE INVENTION

In accordance with a first aspect of the disclosure, there is provided a composition comprising:
a) an ethylenically unsaturated monomer constituent comprising:
   a1) at least one (meth)acrylate-functionalized macromonomer having a weight average molecular weight (Mw) of from 1000 to 100000 daltons; and,
   a2) at least one monomer having at least two ethylenically unsaturated groups and having a weight average molecular weight (Mw) of at most 600 Daltons; and,
b) at least one ester peroxide in accordance with Formula P1: 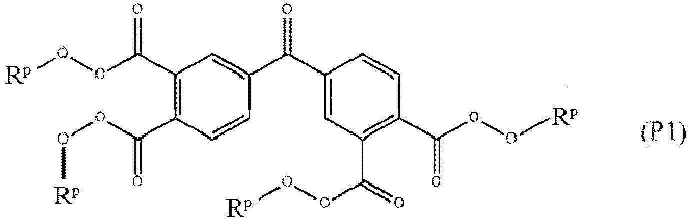 wherein: R^{p} is C₁-C₁₂ alkyl, C₆-C₁₈ aryl, C₇-C₁₈ aralkyl or C₇-C₁₈ alkaryl.

The composition is curable upon exposure to actinic radiation. Equally, the composition may be cured under heating. In certain embodiments, the composition may be cured by the sequential steps of exposure to actinic radiation and heating, thereby enabling the curing of any fraction of the composition which has not received a curing dosage of actinic radiation.

In an important embodiment, the composition comprises, based on the weight of the composition:
from 10 to 90 wt.%, preferably from 15 to 90 wt.% and more preferably from 30 to 90 wt.% of a1) said at least one (meth)acrylate-functionalized macromonomer having a weight average molecular weight (Mw) of from 1000 to 100000 daltons;
from 5 to 40 wt.%, preferably 5 to 25 wt.% and more preferably from 10 to 25 wt.% of a2) said at least one monomer having at least two ethylenically unsaturated groups and having a weight average molecular weight (Mw) of at most 600 Daltons; and,
from 0.05 to 5 wt.%, preferably from 0.1 to 2 wt.% and more preferably from 0.1 to 1 wt.% of b) said at least one ester peroxide in accordance with Formula P1.

The or each (meth)acrylate functionalized macromonomer may desirably be characterized by having: i) two or more (meth)acrylate functional groups per molecule; and / or, ii) a weight average molecular weight (Mw) of from 1000 to 10000 daltons.

Independently of or additional to this statement of preference, it desirable that a1) said at least one (meth)acrylate functionalized macromonomer is chosen from: (meth)acrylate-functionalized urethane macromonomers; epoxy (meth)acrylate oligomers; (meth)acrylate-functionalized polybutadienes; (meth)acrylic polyol (meth)acrylates; polyester (meth)acrylate macromonomers; polyamide (meth)acrylate macromonomers; polyurea (meth)acrylate macromonomers; polyether (meth)acrylate macromonomers; and, mixtures thereof.

A particular preference may be mentioned for constituent a1) comprising or consisting of at least one urethane (meth)acrylate oligomer having a weight average of molecular weight (Mw) of from 1000 to 10000 and a (meth)acrylate functionality of from 1 to 3. In an alternative statement of particular preference, constituent a1) may comprise or consist of at least one epoxy (meth)acrylate oligomer having: a weight average molecular weight (Mw) of from 1000 to 10000 daltons; and, an equivalent weight of the total of epoxide and (meth)acrylate groups of from 100 to 700 g/eq.

Having regard to compounds in accordance with Formula P1, it is preferred that: R^{p} is C₁-C₁₂ alkyl, preferably C₃-C₈ alkyl. In important embodiments, constituent b) comprises or consists of at least one compound chosen from: 3,3',4,4'-tetrakis(t-butyl peroxycarbonyl)benzophenone; 3,3',4,4'- tetrakis(t-amyl peroxycarbonyl)benzophenone; 3,3',4,4'-tetrakis(t-hexyl peroxycarbonyl)benzophenone; 3,3',4,4'-tetrakis(t-octyl peroxycarbonyl)benzophenone; 3,3',4,4'-tetrakis(cumyl peroxycarbonyl)benzophenone; and, mixtures thereof. A particular preference may be noted for constituent b) comprising or consisting of 3,3',4,4'-tetrakis(t-butyl peroxycarbonyl)benzophenone.

In accordance with a second aspect of the present disclosure, there is provided a cured product obtained from the composition as defined herein above and in the appended claims. The present disclosure also provides for the use of said cured product as a coating, adhesive or sealant or as a matrix of a composite material.

In accordance with a still further aspect of the present disclosure, there is provided a method of curing a composition as defined hereinabove and in the appended claims, said method comprising:
i) exposing said composition to actinic radiation, preferably ultraviolet radiation having a wavelength of from 150 to 600 nm, more preferably from 200 to 450 nm; and / or,
ii) heating said composition to a temperature of from 50°C to 250°C, preferably from 50°C to 200°C, more preferably from 100°C to 200°C.

In step i), it is preferred that said composition is exposed to actinic radiation at a dosage of from 5 to 5000 mJ/cm².

Where both step i) and step ii) are performed in this method, said steps may be performed simultaneously and / or independently of one another. The independent performance of these steps includes the sequential performance of these steps in any order.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

The terms "*comprising*", "*comprises*" and "*comprised* of" as used herein are synonymous with "*including*", "*includes*"*,* "*containing*" or "*contains*", and are inclusive or open-ended and do not exclude additional, non-recited members, elements or method steps.

As used herein, the term "*consisting of*" excludes any element, ingredient, member or method step not specified. For completeness, the term "*comprising*" encompasses "*consisting of*"*.*

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "*exemplary*" is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

The term "*plurality*" as used herein is defined as two or more than two.

The term "*fraction*" as used herein refers to a numerical quantity which defines a part up to but not including 100 percent or the entirety of the thing in question.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to x*" specifically includes 0 wt.%: the ingredient defined by said range may be absent from the material or may be present in the material in an amount up to x wt.%.

As used herein, room temperature is 23°C plus or minus 2°C. As used herein, "*ambient conditions*" means the temperature and pressure of the surroundings in which the curable film is located or in which a coating layer or the substrate for said coating layer is located.

The term "*liquid*" herein means in a liquid state at room temperature and at atmospheric pressure. Analogously, the term "*solid*" means in a solid state at room temperature and at atmospheric pressure. Solid state is defined as the state of matter in which materials are not fluid but retain their boundaries without support, the atoms or molecules occupying fixed positions with respect to each other and unable to move freely.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the compositions are done using the No. 6 spindle at a speed of 20 revolutions per minute for 1 minute until the viscometer equilibrates. The viscosity corresponding to the equilibrium reading is then calculated using the calibration.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature, such as in "Polymer Handbook", edited by J. Brandrup and E. H. Immergut, Interscience Publishers.

The actual glass transition temperature (T_{g}) of a polymer can be determined by differential scanning calorimetry (DSC). The use of DSC to determine T_{g} is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. The glass transition temperatures (T_{g}) specifically measured in the current patent application have been measured according to the methodology of Deutsches Institut für Normung (DIN) 11357.

The term "*softening point*" as used herein refers to the temperature at which a material, such as a polymer, loses its solid characteristics and becomes relatively fluid. A material's softening point as given herein is that temperature measured using the standard ball and ring method according to ISO 4625-1: 2004.

Unless otherwise stated, the term "*particle size*" refers to the largest axis of the particle. In the case of a generally spherical particle, the largest axis is the diameter.

The term "*median volume particle size" (Dv50)*, as used herein, refers to a particle size corresponding to 50% of the volume of the sampled particles being greater than and 50% of the volume of the sampled particles being smaller than the recited Dv50 value. Particle size is determined herein by laser diffraction using Anton Paar Particle Size Analyzer (PSA) 1190.

Broadly, "*gel time*" describes the time at which a mixture is substantially incapable of flow: in molecular terms, gel time references the point at which an infinite network is formed. As used hereinafter, the quantified "*gel time*" means that time at which a viscosity of 75000 centipoise is attained, said gel time of the composition being determined by Gardner Standard Model Gel Timers at a temperature of 180°C and 50% Relative Humidity (RH).

As used herein, the term "*metallic*" may be used to denote pure metal, metal alloys or metal composites. As used herein, the term "*alloy*" refers to a substance composed of two or more metals or of a metal and a non-metal which have been intimately united, usually by being fused together and dissolved in each other when molten.

The term "*cure accelerator*" is intended herein to encompass any material which is a cure accelerator (or curing agent) for the (meth)acrylate functional compounds disclosed herein and, if applicable, for other ethylenically unsaturated monomers present in the composition. The accelerator may be of either the catalytic or reactive type.

The "*hydroxyl number*" as used herein refers to the number of milligrams of KOH having the same hydroxyl content as one gram of the polyol. The hydroxyl number is determined in accordance with ASTM E222 *Standard Test Methods for Hydroxyl Groups Using Acetic Anhydride Acetylation.*

As used herein, the term "*equivalent (eq.")* relates, as is usual in chemical notation, to the relative number of reactive groups present in the reaction. The term "*equivalent weight*" as used herein refers to the molecular weight divided by the number of a function concerned. As such, "*epoxide equivalent weight*" (EEW) means the weight of resin, in grams, that contains one equivalent of epoxide.

As used herein, an "*active hydrogen compound*" is a compound that has at least one active hydrogen functional group. Such a functional group includes at least one hydrogen atom that may be readily dissociated therefrom. Preferably, said hydrogen atom is attached to a nitrogen atom, an oxygen atom, a phosphorous atom, or a sulfur atom and, as such, exemplary active hydrogen functional groups are hydroxyl functional groups, amino functional groups and thiol functional groups.

As used herein, "*polyol*" refers to any compound comprising two or more hydroxyl groups: the term is thus intended to encompass diols, triols and compounds containing four or more -OH groups.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine and phenyl.

As used herein, the term "*monomer*" refers to a substance that can undergo a polymerization reaction to contribute constitutional units to the chemical structure of a polymer. The term "*monomer*" herein encompasses macromonomers which, in accordance with IUPAC Gold Book are polymeric or oligomeric molecules possessing at least one reactive functional group: the macromonomer participates in a polymerization reaction and contributes a single monomer unit to the chain of the product polymer.

The term "*ethylenically unsaturated monomer*" as used herein, refers to any monomer containing a terminal double bond capable of polymerization under normal conditions of free-radical addition polymerization.

As used herein, "*(meth)acryl*" is a shorthand term referring to "*acryl*" and/or "*methacryl*"*.* Thus the term "*(meth)acrylate*" refers collectively to acrylate and methacrylate.

As used herein, "*C₁-Cₙ alkyl*" group refers to a monovalent group that contains 1 to n carbons atoms, that is a radical of an alkane and includes straight-chain and branched organic groups. As such, a "*C₁-C₄ alkyl*" group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms "*alkylene group*" refers to a divalent radical divalent radical formed by the removal of two hydrogen atoms from an alkyl group, which group may be substituted or unsubstituted and may optionally be interrupted by at least one heteroatom.

The term "*C₁-Cₙ hydroxyalkyl*" as used herein refers to an HO-(alkyl) group having from 1 to n carbon atoms, where the point of attachment of the substituent is through the oxygen-atom and the alkyl group is as defined above.

An "*alkoxy group*" refers to a monovalent group represented by -OA where A is an alkyl group: non-limiting examples thereof are a methoxy group, an ethoxy group and an iso-propyloxy group. The term "*alkoxylated*" as used herein means comprising at least one alkoxy group.

As used herein, "*C₂-C₆ alkenyl*" group refers to an aliphatic carbon group that contains 2 to 6 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "cis" and "trans" configurations, or alternatively, "E" and "Z" configurations, as appreciated by those of ordinary skill in the art. In general, however, a preference for unsubstituted alkenyl groups containing from 2 to 6 (C₂-C₆) or from 2 to 4 (C₂-C₄) carbon atoms should be noted. And Examples of C₂-C₆ alkenyl groups include, but are not limited to: ethenyl; 1-propenyl; 2-propenyl; 1-methyl-ethenyl; 1-butenyl; 2-butenyl; 4-methylbutenyl; 1-pentenyl; 2-pentenyl; 3-pentenyl; 4-pentenyl; 4-methyl-3-pentenyl; 1-hexenyl; 3-hexenyl; and, 5-hexenyl.

The term "*C₃-C₆ cycloalkyl*" as used herein means an optionally substituted, saturated cyclic hydrocarbon having 3-6 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, "*C₃-C₆ cycloalkylene*" means a divalent radical formed by the removal of two hydrogen atoms from one or more rings of a cycloalkyl group having from 3 to 6 carbon atoms.

As used herein, "*C₂-C₁₈ alkenyl*" refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "*cis*" and "*trans*" configurations, or alternatively, "*E*" and "Z" configurations, as appreciated by those of ordinary skill in the art. Examples of said C₂-C₂₀ alkenyl groups include, but are not limited to: -CH=CH₂; -CH=CHCH₃; -CH₂CH=CH₂; -C(=CH₂)(CH₃); - CH=CHCH₂CH₃; -CH₂CH=CHCH₃; -CH₂CH₂CH=CH₂; - CH=C(CH₃)₂; -CH₂C(=CH₂)(CH₃); - C(=CH₂)CH₂CH₃; - C(CH₃)=CHCH₃; -C(CH₃)CH=CH₂; -CH=CHCH₂CH₂CH₃; -CH₂CH=CHCH₂CH_{3;} -CH₂CH₂CH=CHCH₃; -CH₂CH₂CH₂CH=CH₂; -C(=CH₂)CH₂CH₂CH₃; -C(CH₃)=CHCH₂CH₃; - CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an "*C₆-C₁₈ aryl*" group used alone or as part of a larger moiety - as in "*aralkyl group*" - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

The term "*arylene" as* used herein refers to a divalent radical counterpart of an aryl group. Further, as used herein, "*alkylaryl*" refers to alkyl-substituted aryl groups as set forth above. Moreover, as used herein "*aralkyl*" means an alkyl group substituted with an aryl radical as defined above.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*", "*heterocycloalkyl*", "*heteroaryl*" and "*heteroalkylaryl*" moieties are alkyl, cycloalkyl and aryl groups as defined hereinabove, respectively, containing N, O, Si or S as part of their structure.

The term "*heterocyclyl*" refers to a monovalent chain of carbon and heteroatoms, wherein the heteroatoms are selected from N, O, Si or S, a portion of which, including at least one heteroatom, form a ring.

The term "*substituted*" refers to substitution with at least one suitable substituent. For completeness: the substituents may connect to the specified group or moiety at one or more positions; and, multiple degrees of substitution are allowed unless otherwise stated. Further, the terms "*substitution*" or "*substituted with*" include the implicit proviso that such substitution is in accordance with permitted valence of the substituted atom and the substituent, and that the substitution results in a stable compound that does not spontaneously undergo transformation by, for instance, rearrangement, cyclization or elimination.

The term "*substantially free*" is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term "*substantially free*" encompasses those embodiments where the specified compound, moiety, functional group, element, ion, or other like component is completely absent from the subject material or is not present in any amount measurable by techniques generally used in the art.

The term "*anhydrous*" as used herein has equivalence to the term "*substantially free of water*"*.* Water is not deliberately added to a given composition and is present, at most, in only trace amounts which will have no (adverse) effect on the desired properties of the composition.

### DETAILED DESCRIPTION OF THE INVENTION

Referring back, the present disclosure is directed to a composition which is curable under either or both of actinic irradiation and heating, said composition comprising:
a) an ethylenically unsaturated monomer constituent comprising:
   a1) at least one (meth)acrylate-functionalized macromonomer having a weight average molecular weight (Mw) of from 1000 to 100000 daltons; and,
   a2) at least one monomer having at least two ethylenically unsaturated groups and having a weight average molecular weight (Mw) of at most 600 Daltons; and,
b) at least one ester peroxide in accordance with Formula P1 as defined herein.

### a) Ethylenically Unsaturated Monomers

The curable composition of present disclosure comprises ethylenically unsaturated monomers, the (co-)polymerization of which monomers yields the matrix of the cured composition. The ethylenically unsaturated monomer constituent of the composition is characterized in that it comprises: a1) at least one (meth)acrylate-functionalized macromonomer having a weight average molecular weight (Mw) of from 1000 to 100000 daltons; and, a2) at least one monomer having at least two ethylenically unsaturated groups and having a weight average molecular weight (Mw) of at most 600 Daltons. Further ethylenically unsaturated monomers - such as constituents a3) to a5) mentioned herein below - may optionally be present in the composition.

### a1) (Meth)acrylate-functionalized Macromonomer

The curable composition of the present disclosure typically comprises from 10 to 90 wt.%, based on the total weight of the composition of a1) at least one (meth)acrylate-functionalized macromonomer having a weight average molecular weight (Mw) of greater than 600 daltons. For example, the curable composition may comprise, based on the total weight of the composition, from 15 to 90 wt.%, from 30 to 90 wt.% or from 45 to 90 wt.% of a1) said at least one (meth)acrylate-functionalized macromonomer. Said macromonomers may have one or more acrylate and/or methacrylate groups attached to the polymeric or oligomeric backbone, which (meth)acrylate functional groups may be in a terminal position on the macromonomer and / or may be distributed along the polymeric or oligomeric backbone thereof.

It is preferred that the or each (meth)acrylate functionalized macromonomer: i) has two or more (meth)acrylate functional groups per molecule; and / or, ii) has a weight average molecular weight (Mw) of from 1000 to 100000 daltons, for example from 1000 to 10000 or from 1000 to 5000 daltons.

Examples of such macromonomers, which may be used alone or in combination, include but are not limited to: (meth)acrylate-functionalized urethane macromonomers, such as (meth)acrylate-functionalized polyester urethanes, (meth)acrylate-functionalized polyether urethanes and (meth)acrylate functionalized polyurea urethanes; epoxy (meth)acrylate oligomer; (meth)acrylate-functionalized polybutadienes; (meth)acrylic polyol (meth)acrylates, which may be prepared from poly(meth)acrylates which carry OH groups; polyester (meth)acrylate macromonomers; polyamide (meth)acrylate macromonomers; polyurea (meth)acrylate macromonomers; and, polyether (meth)acrylate macromonomers, including polyethylene glycol di(meth)acrylates. Such (meth)acrylate-functionalized macromonomers and their methods of preparation are disclosed in *inter alia*: US Patent No. 4,574,138; US Patent No. 4,439,600; US Patent No. 4,380,613; US Patent No. 4,309,526; US Patent No. 4,295,909; US Patent No. 4,018,851; US Patent No. 3,676,398; US Patent No. 3,770,602; US Patent No. 4,072,529; US Patent No. 4,511,732; US Patent No. 3,700,643; US Patent No. 4,133,723; US Patent No. 4,188,455; US Patent No. 4,206,025; US Patent No. 5,002,976; and, US Patent No. 9,623,631.

In certain embodiments, component a1) may comprise or consist of at least one (meth)acrylate ester corresponding to Formula (I): 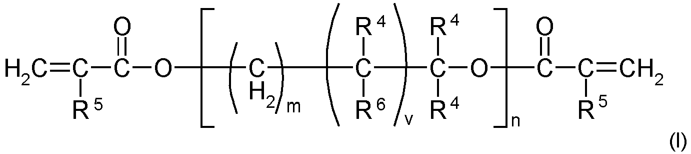 wherein: R⁴ is hydrogen, C₁-C₄ alkyl or 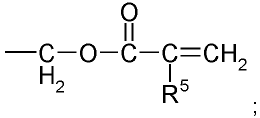
R⁵ is hydrogen, halogen or C₁-C₄ alkyl;
R⁶ is hydrogen, hydroxy or 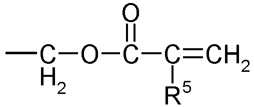
m is an integer ≥1, preferably from 1 to 8;
v is 0 or 1; and,
n is an integer n is ≥3, preferably from 3 to 30.

Of such polyether (meth)acrylates of Formula I mention may in particular be made of polyethylene glycol) di(meth)acrylates possessing the structure below: 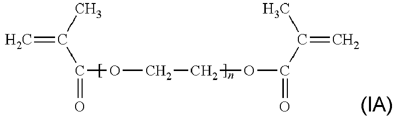 wherein: n is ≥3, preferably from 3 to 30, more preferably from 3 to 20.

As such, specific examples include but are not limited to: PEG 200 DMA (n≈ 4); PEG 400 DMA (n≈9); PEG 600 DMA (n≈ 14); and, PEG 800 DMA (n≈19), in which the assigned number (e.g., 400) represents the weight average molecular weight of the glycol portion of the molecule.

Further (meth)acrylate esters suitable as reactants of constituent a1) may possess the formula:

H₂C=C(R^{u})-C(O)-O-R^{v}-L-H

wherein: R^{u} is H, halogen or C₁ alkyl;
R^{v} is C₁-C₈ alkylene, C₆-C₁₈ arylene, C₇-C₁₈ alkylarylene or C₇-C₁₈ aralkylene;
L is -O- or -N(R^{w})-; and,
R^{w} is H or C₁-C₆ alkyl.

Upon proper reaction with a polyisocyanate, a macromonomer is yielded having the general formula (U1):

[H₂C=C(R^{u})-C(O)-O-R^{v}-L-C(O)-NH-]ₙ-B

wherein: n is an integer of from 2 to 6;
R^{u}, R^{v}, R^{w}, L have the meanings assigned above; and,
B is a polyvalent organic radical selected from alkyl, alkenyl, cycloalkyl, cycloalkenyl, aryl, alkaryl, alkaryl or heterocyclic radicals.

Exemplary macromonomers in accordance with Formula (U1) may possess a weight average molecular weight (Mw) of from 1000 to 10000 daltons, such as from 1000 to 5000 daltons.

Another useful class of macromonomer having utility herein, either alone or in combination with other macromonomers, are the reaction product of (meth)acrylate functionalized hydroxyl- or amino-containing materials and polyisocyanate in suitable stoichiometric amounts so as to convert all of the isocyanate groups to urethane or ureido groups, respectively.

### a1)-1 Urethane (meth)acrylate oligomer

In an important embodiment of the present composition, constituent a1) comprises or consists of at least one urethane (meth)acrylate oligomer, said oligomer having a weight average molecular weight (Mw) of from 1000 to 100000 daltons and at least one pendant (meth)acrylate group.

The weight average molecular weight (Mw) of the urethane (meth)acrylate oligomer should be sufficiently high that the urethane segments impart suitable elasticity to the cured composition but low enough that the oligomer is not too viscous to be facilely processed or admixed with the other constituents of the composition. The or each urethane (meth)acrylate oligomer may preferably be characterized by at least one of: a weight average of molecular weight (Mw) of from 1000 to 10000 for instance from 1000 to 5000 daltons; and, a (meth)acrylate functionality of from 1 to 3, for example from 2 to 3 or from 2.2 to 2.9.

As is known to the skilled artisan, urethane (meth)acrylate oligomers are most commonly obtained by the reaction of a pre-polymer bearing free NCO groups - sometimes referred to as an aromatic or aliphatic oligoisocyanate - with hydroxyl functional (meth)acrylate compounds. The NCO-functional pre-polymers may be obtained from the reaction of: p) at least one polyol; q) optionally further active hydrogen compounds; and, r) at least one polyisocyanate compound. The molar equivalents ratio of NCO groups to active hydrogen atoms of the reactants should be selected to ensure that free NCO groups are present: the molar equivalents ratio might therefore be at least 1.1:1 and preferably from 1.1:1 to 1.5:1.

The aforementioned reaction may be performed under anhydrous conditions or in the presence of an organic solvent. The reaction may further be performed under catalysis and, for instance, at a temperature of from 25 to 100°C. And the yielded pre-polymer should preferably be characterized by at least one of: i) an NCO content of from 5 to 30%, preferably from 10 to 25 wt.% based on the weight of the pre-polymer; ii) an NCO functionality of from 2.2 to 3.0, preferably from 2.2 or 2.4 to 2.9; iii) a viscosity at 25°C of from 300 to 35,000 mPa.s, preferably from 1,000 to 10,000 mPa.s; and, iv) a number average molecular weight (Mn) of from 500 to 30,000, for example from 500 to 15,000 or from 500 to 10,000 g/mol. For completeness, these characterizations i) to iv) are not intended to be mutually exclusive: indeed, the pre-polymer may meet one, two, three or four of these stated characterizations.

The at least one reactant polyol should herein be selected from the group consisting of: polyester polyols; polyether polyols; and, polycarbonate polyols. The polyol should preferably have a number average molecular weight (Mn) of from 1000 to 50,000 g/mol, for instance from 1000 to 25,000 g/mol. Alternatively or additionally to this molecular weight characterization, the hydroxyl number of the reactant polyol should preferably be from 20 to 850 mg KOH/g, for instance from 25 to 500 mg KOH/g.

Polycarbonate diols may be obtained by reacting carbonic acid derivatives with diols. Exemplary carbonic acid derivatives are diaryl carbonates including but not limited to diphenyl carbonate, di(C₁-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which example include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiolactone, δ-valerolactone, (C₁-C₆)alkyl-valerolactone, ε-caprolactone and (C₁-C₆)alkyl-ε-caprolactone.

The above aside, it is preferred that the polyol from which the polyurethane pre-polymer is derived is a polyether polyol, in particular a polyether polyol having a polydispersity (PD) of less than 2, preferably less than 1.5, and more preferably less than 1.3. For completeness, a "*polyether*" is understood for purpose of the present invention as a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably, the polyether polyol is a polyoxyalkylene and in particular a polyoxy(C₂-C₃)alkylene. For completeness, the term polyoxy(C₂-C₃)alkylene refers to polyether radicals derived from ethyleneoxide, propyleneoxide or both ethyleneoxide and propyleneoxide.

It is noted that at least one monol can be employed in synthesizing the pre-polymer as a further active hydrogen reactant q). For example, a mono-functional hydrophilic polyoxy(C₂-C₃)alkylene - such as polyoxyethylene or polyoxpropylene - can be incorporated into the polyurethane as a means of modifying the properties of the latex. When present, the monol is present in an amount of from 0.1 to 5 wt.%, based on the weight of reactants p) to r).

As used herein "*polyisocyanate*" means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6- hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethylcyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term "*aromatic polyisocyanate*" is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized and / or isocyanurated by generally known methods, such as described in UK Patent No. 889,050. It is also noted that the term "*polyisocyanate*" is intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s).

As regards the aforementioned reaction of polyisocyanates with said polyols, standard catalysts known in the art include: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the polyisocyanate, the amount of catalyst employed is typically in the range from 0.005 to 10% by weight of the mixture catalyzed.

As noted, the NCO-functional pre-polymer can optionally be made in the presence of a solvent and the solvent removed at least in part and preferably wholly either before or after the reaction with the hydroxyl functional (meth)acrylates. When a solvent is used, examples of solvents which are not reactive with the isocyanate include: ketones such as acetone and butanone; ethers such as tetrahydrofuran, dioxane and dimethoxyethane; ether esters such as methoxypropyl acetate; (cyclic) amide and ureas such as dimethylformamide and dimethylacetamide; N,N'-dimethyl-2,5-dizapentanone; N-methylpyrrolidone; and, capped glycol ethers. Such solvents may be added at any stage of the pre-polymer preparation.

To form the urethane (meth)acrylate oligomer, the isocyanate (NCO) groups of the pre-polymer are capped with an isocyanate-reactive capping compound having a hydroxyl group and (meth)acrylate functional group. Suitable end-capping compounds include C₁-C₁₈ hydroxyalkyl esters of (meth)acrylic acid and, in particular, C₁-C₁₂ or C₁-C₈ hydroxyalkyl esters of (meth)acrylic acid. Without intention to limit the present invention, said (meth)acrylates bearing a hydroxyl group may be selected from the group consisting of: 2-hydroxyethyl (meth)acrylate; 2-hydroxyisopropyl (meth)acrylate; 4-hydroxybutyl (meth)acrylate; hydroxyethylcaprolactone (meth)acrylate; pentaerythritol tri(meth)acrylate; pentaerythritol tetra(meth)acrylate; dipentaerythritol penta(meth)acrylate; dipentaerythritol hexa(meth)acrylate; and, combinations thereof.

The end-capping reaction may optionally be performed under heating and / or catalysis. That aside, the progress of the reaction should be monitored by Fourier Transform Infrared (FTIR) spectroscopy and deemed complete upon disappearance of the band attributable to the -NCO stretch at circa 2250 cm⁻¹.

The above aside, suitable urethane (meth)arylate oligomers having at least one pendant (meth)acrylate group may be obtained from commercial sources. Non-limiting examples of commercial urethane acrylate oligomers, which may be used alone or in combination include: Miramer PU210, Miramer PU2034C, Miramer PU2100, Miramer PU2200, Miramer PU330, Miramer PU340, Miramer PU3200 and Miramer PU2560, available from Miwon Commercial Co., Ltd.; and, EBECRYL 244, EBECRYL 245, EBECRYL 254, EBECRYL 264, EBECRYL 265, EBECRYL 270, EBECRYL 280, EBECRYL 284, EBECRYL 285, EBECRYL 294, EBECRYL 1259, EBECRYL 1290, EBECRYL 4830, EBECRYL 4835, EBECRYL 4858, EBECRYL 4883, EBECRYL 8296, EBECRYL 8402, EBECRYL 8465, EBECRYL 8800, EBECRYL 8803, EBECRYL 8804 EBECRYL 8805, EBECRYL 8806, EBECRYL 9215, EBECRYL 9216, EBECRYL 9259, EBECRYL 9260, EBECRYL 9270, EBECRYL 9370, UA 7933, UP 112, UP 136 and UP 137 available from Daicell-Allnex Ltd.

### a1)-2 Epoxy (meth)acrylate oligomer

In an alternative embodiment of the present composition, constituent a1) comprises or consists of at least one epoxy (meth)acrylate oligomer, said oligomer having a weight average molecular weight (Mw) of from 1000 to 100000 daltons and at least one pendant (meth)acrylate group. The or each epoxy (meth)acrylate oligomer may preferably be characterized by at least one of: a weight average of molecular weight (Mw) of from 1000 to 10000 for instance from 1000 to 5000 daltons; and, an equivalent weight of the total of epoxide and (meth)acrylate groups of from 100 to 700 g/eq, for instance from 120 to 320 g/eq.

The epoxy (meth)acrylate oligomer is obtainable via the reaction of acrylic acid or methacrylic acid with a polyepoxide compound at stoichiometric ratio such that at least one pendant (meth)acrylate group is retained in the obtained adduct. An oligomer with a desired (meth)acrylation proportion can be obtained by suitably changing the amounts of polyepoxide compound and (meth)acrylic acid to be reacted. For instance, the amount of (meth)acrylic acid to be reacted per equivalent of epoxide group should be from 0.5 to 1.2 equivalents.

Without intention to limit the present invention, suitable reactant polyepoxide compounds may be liquid, solid or in solution in solvent. Based on the above characterization, such reactant polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be reacted with (meth)acrylic acid, mention may be made of: polyglycidyl ethers of polyhydric alcohols and polyhydric phenols; polyglycidyl esters of polycarboxylic acids; and, epoxidized polyethylenically unsaturated hydrocarbons.

The use of diepoxide compounds is preferred. For instance, suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative reactant polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred reactant polyepoxide compounds include: bisphenol-A epoxy resins; bisphenol-F epoxy resins; bisphenol-A/F epoxy resin blends; polypropylene glycol diglycidyl ethers, such as DER^{™} 732; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

As will be recognized by the skilled artisan, the at least partial (meth)acrylation of the epoxide functional groups of a reactant polyepoxide is typically performed in the presence of a basic catalyst, of which mention may be made of triphenylphosphine (PPh₃), N,N'-dimethyltoluidine, pyridine, imidazole, triethylamine and tributylamine. The retention of such basic catalysts in the at least partially (meth)acrylated oligomer can, however, be deleterious to the storage stability of that oligomer. In order to prevent cross-linking reactions during storage - and the concomitant thickening and gelation of the product - the catalyst residue should desirably be removed from the epoxy (meth)arylate oligomer before it is used in the present composition. Illustrative methods for removing residual catalyst are disclosed *inter alia* in: WO2011/078113; JP-Hei-5-332031; JP-Hei-1 1-012345; JP 2002-145984 A; JP 2004-244543; JP 2013-103950; and, JP2019-052273A.

In an alternative strategy, a polymerization inhibitor - such as a quinone or quinone methide - might be added to the partially (meth)acrylated reaction product prior to its storage. However, this is not necessarily preferred as such inhibitors constitute an impurity which would be present in the composition.

The above aside, suitable epoxy (meth)arylate oligomers having at least one (meth)acrylate group may be obtained from commercial sources. A representative commercial epoxy (meth)arylate oligomer is Epoxyester 300A available from Kyoeisha Chemical Co. Ltd.

### a2) Monomers having at least two ethylenically unsaturated groups

In certain embodiments, the composition of the present disclosure comprises from 5 to 40 wt.%, based on the weight of the composition, of a2) at least one monomer having at least two ethylenically unsaturated groups and having a weight average molecular weight (Mw) of at most 600 Daltons. For example, the composition may comprise from 5 to 25 wt.% or from 10 to 25 wt.%, based on the weight of the composition, of a2) said at least one monomer having at least two ethylenically unsaturated groups and having a weight average molecular weight (Mw) of at most 600 Daltons.

Exemplary monomers of constituent a2), which may be used alone or in combination, include: conjugated dienes, such as butadiene and isoprene; allyl compounds, including such as allyl (meth)acrylate, diallyl phthalate, diallyl itaconate, diallyl fumarate and diallyl maleate; polyallyl ethers of polyols, including polyallyl ethers of trimethylolpropane, pentaerythritol and sucrose; poly(meth)acrylates of alkane polyols; poly(meth)acrylates of oxyalkane polyols; and, poly(C₂-C₄)alkylene glycol di(meth)acrylates. For instance, compounds having utility herein, either alone or in combination, include: 1 ,2-ethanediol dimethacrylate; 1,2-propanediol di(meth)acrylate; 1,3-propanediol di(meth)acrylate; 1,3-butanediol di(meth)acrylate; 1,4-butanediol di(meth)acrylate; 2,2-dimethylpropane-1,3-diol di(meth)acrylate; 1,6-hexanediol di(meth)acrylate; 3-methyl-1,5-pentanediol di(meth)acrylate; 1,10-decanediol diacrylate; diethylene glycol di(meth)acrylate; dipropylene glycol di(meth)acrylate; triethylene glycol di(meth)acrylate; tetraethylene glycol di(meth)acrylate; dibutylene glycol di(meth)acrylate; di(pentamethylene glycol)dimethacrylate; and, tricyclodecanedimethanol di(meth)acrylate.

Further exemplary compounds having two (meth)acrylate groups include compounds in accordance with Formula DA1:

H₂C=C(R^{m})-C(O)O-(RⁿO)ₚ-O(O)C-C(R^{m})=CH₂ (DA1)

wherein:
each R^{m} is independently H or CH₃;
each Rⁿ is independently C₂-C₄ alkylene; and,
p is an integer of from 1 to 8.

It is preferred that: each R^{m} is independently H or CH₃, preferably H; each Rⁿ is independently ethylene or propylene; and, p is an integer of from 1 to 5 or from 2 to 4.

Exemplary compounds in accordance with Formula DA1, which may be used alone or in combination, include but are not limited to: tetraethylene glycol di(meth)acrylate; triethylene glycol di(meth)acrylate; tripropylene glycol di(meth)acrylate; and, dipropylene glycol di(meth)acrylate.

Tri(meth)acrylate compounds having utility in constituent a2) include the tri(meth)acrylates of trihydric polyols. The tri(meth)acrylates of alkoxylated trihydric polyols may be used, in particular the tri(meth)acrylates of ethoxylated, propoxylated and / or butoxylated trihydric polyols. Exemplary trifunctional (meth)acrylate compounds included but are not limited to: trimethylolpropane tri(meth)acrylate; pentaerythritol tri(meth)acrylate; ethoxylated trimethylolpropane tri(meth)acrylate; propoxylated trimethylolpropane tri(meth)acrylate; ethoxylated trimethylolpropane tri(meth)acrylate; and, propoxylated glyceryl tri(meth)acrylate. In certain embodiments, trimethylolpropane triacrylate (TMPTA) and / or pentaerythritol triacrylate (PETIA) may be used.

Further (meth)acrylate compounds having utility in constituent a2) include but are not limited to: di(trimethylolpropane) tetracrylate; pentaerythritol tetracrylate; and, di-trimethylolpropane tetraacrylate (Di-TMPTTA); and, dipentaerythritol pentaacrylate (Di-PEPA).

### a3) Aliphatic and Cycloaliphatic (Meth)acrylate Monomers

Based on the weight of the composition, the composition of the present disclosure may comprise from 0 to 25 wt.%, for example from 0 to 20 wt.%, of a3) at least one (meth)acrylate monomer represented by Formula II:

H₂C=CGCO₂R¹ (II)

wherein: G is hydrogen, halogen or C₁ alkyl; and,
R¹ is: C₁-C₃₀ alkyl; C₁-C₁₈ hydroxyalkyl; C₂-C₃₀ heteroalkyl; C₃-C₃₀ cycloalkyl; or, C₂-C₈ heterocycloalkyl.

For example, R¹ may be: C₁-C₁₈ alkyl, C₁-C₁₂ hydroxyalkyl; C₂-C₁₈ heteroalkyl, C₃-C₁₈ cycloalkyl; or, C₂-C₈ heterocycloalkyl. Desirably, said monomer(s) a3) are characterized in that R¹ is C₁-C₁₈ alkyl, C₁-C₆ hydroxyalkyl or C₃-C₁₈ cycloalkyl.

Examples of (meth)acrylate monomers a3) in accordance with Formula (II) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; and, perfluorooctyl (meth)acrylate.

### a4) Aromatic (Meth)acrylate Monomers

Based on the weight of the composition, the composition of the present disclosure may comprise from 0 to 25 wt.%, for example from 0 to 20 wt.%, of a4) at least one (meth)acrylate monomer represented by Formula II:

H₂C=CQCO₂R² (III)

wherein: Q is hydrogen, halogen or C₁ alkyl; and,
R² is C₆-C₁₈ aryl, C₁-C₉ heteroaryl, C₇-C₁₈ alkylaryl, C₇-C₁₈ heteroalkylaryl or C₇-C₁₈ aralkyl.

Exemplary (meth)acrylate monomers a4) in accordance with Formula (III) - which may be used alone or in combination - include but are not limited to: benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

### a5) Further Ethylenically Unsaturated Monomers

The composition may comprise further ethylenically unsaturated monomers not conforming to the definitions of a1), a2), a3) and a4). It is preferred however that the composition comprises at most 20 wt.%, for instance at most 15 wt.% or at most 10 wt.% of a5) said further ethylenically unsaturated monomers, based on the weight of the composition.

Operable further (meth)acrylate monomers include those that possess certain additional, non-polymerizing functionalities which can improve the surface adhesion of polymers derived therefrom. Mention in this regard may be made of anhydride, urethane, phosphate or phosphonate functionalities and (meth)acrylate monomers bearing such functionalities may be used in the present composition. A listing of such phosphorus compounds is found in US Patent No. 4,223,115. Exemplary monomers include: 2-mono methacryloxyethyl phosphate; bis(2-methacryloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; 2-hydroxyethylmethacrylate phosphate; 10-[(2-methylprop-2-enoyl)oxy]decyl dihydrogen phosphate (10-*methacryloyloxydecyl dihydrogen phosphate*); and, 4-methacryloxyethyl trimellitic anhydride. The use of 2-methacryloxyethyl phenyl urethane (MAPU) might also be mentioned.

The composition may, in certain circumstances, further comprise co-polymerizable acid. It is considered that the co-polymerizable acid might improve the cure speed and, where applicable, metal adhesion of the composition. For completeness, whilst such monomers should typically be used in the form of free acid, it is not precluded that the constituent acid groups of the monomers be partially or completely neutralized with suitable bases, provided this does not compromise their participation in co-polymerization.

Without intention to limit the present disclosure, co-polymerizable acid monomers should be selected from the group consisting of: ethylenically unsaturated carboxylic acids; ethylenically unsaturated sulfonic acids; vinylphosphonic acid; and, mixtures thereof. Suitable ethylenically unsaturated sulfonic acids are, for instance, vinylsulfonic acid, styrenesulfonic acid and acrylamidomethylpropanesulfonic acid.

Preferably the co-polymerizable acid of this part comprises or consists of ethylenically unsaturated carboxylic acids selected from the group consisting of: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. In particular, the co-polymerizable acid of this part comprises or consists of at least one acid selected from the group consisting of: methacrylic acid; acrylic acid; itaconic acid; maleic acid; aconitic acid; crotonic acid; and, fumaric acid.

The present disclosure also does not preclude the presence of allylic monomers which can be copolymerized with (meth)acrylate monomers. Mention in this regard may be made of: prop-2-en-1-ol (*allyl alcohol*); 3-chloroprop-1-ene (*allyl chloride*); diallyl ortho-phthalate; diallyl terephthalate, diethylene glycol diallyl carbonate; triallyl cyanurate; triallyl trimesate; and, triallyl isocyanurate. However, when included, such allylic co-monomers should constitute less than 25 wt.%, based on the total weight of ethylenically unsaturated monomers.

The present disclosure also does not preclude the presence of vinyl monomers which can be copolymerized with (meth)acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride and vinylidene chloride. However, when included, such vinyl co-monomers should constitute less than 10 wt.%, preferably less than 5 wt.%, based on the total weight of ethylenically unsaturated monomers.

### b) Ester Peroxide Compound

The compositions of the present invention typically include from 0.05 to 5 wt.%, for instance from 0.1 to 2 wt.% or from 0.1 to 1 wt.%, based on the weight of the composition, of b) at least one ester peroxide in accordance with Formula P1: 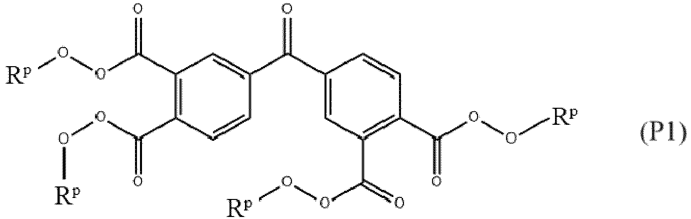 wherein: R^{p} is C₁-C₁₂ alkyl, C₆-C₁₈ aryl, C₇-C₁₈ aralkyl or C₇-C₁₈ alkaryl.

In important embodiments of Formula P1, R^{p} is C₁-C₁₂ alkyl or more preferably C₃-C₈ alkyl.

Exemplary ester peroxides in accordance with Formula P1, which may have utility in the present composition either alone or in combination, include: 3,3',4,4'-tetrakis(t-butyl peroxycarbonyl)benzophenone; 3,3',4,4'- tetrakis(t-amyl peroxycarbonyl)benzophenone; 3,3',4,4'-tetrakis(t-hexyl peroxycarbonyl)benzophenone; 3,3',4,4'-tetrakis(t-octyl peroxycarbonyl)benzophenone; and, 3,3',4,4'- tetrakis(cumyl peroxycarbonyl)benzophenone. A particular preference for the use of 3,3',4,4'-tetrakis(t-butyl peroxycarbonyl)benzophenone (*3,3',4,4'-tetra(t-butyl peroxycarbonate) benzophenone, CAS77473-08-6*) may be mentioned.

The ester peroxide of Formula P1 initiates the polymerization or hardening of the compositions upon either irradiation with actinic radiation or upon heating. Expressed differently, the active species which initiates the cure reactions of the present disclosure may be generated from the ester peroxides under irradiation or under heating. It will be noted however, that where irradiation is employed to generate the active species, the cure chemistry is subject to the same rules of thermodynamics as any chemical reaction: the reaction rate may be accelerated by heat; the practice of using thermal treatments to enhance the actinic-radiation cure of monomers is generally known in the art.

It is not precluded that the compositions of the disclosure may include further photo-initiator compounds to the aforementioned ester peroxide, which photo-initiator compound(s) would initiate the polymerization or hardening of the compositions upon irradiation with actinic radiation. Given that the compositions contain compounds possessing free-radically active, unsaturated groups - in particular (meth)acrylate compounds and epoxy-functional (meth)acrylate compounds - the preferred further photoinitiators would be photoactive compounds that undergo a Norrish I cleavage to generate free radicals that can initiate by addition to the acrylic double bonds.

It is preferred however that any further photo-initiator(s) should be present in the composition *in toto* in an amount of from 0 to 25 wt.%, based on the weight of said constituent b).

As would be recognized by the skilled artisan, photosensitizers can be incorporated into the compositions to improve the efficiency with which compounds of Formula P1 and any further photo-initiators present use the photonic energy delivered. The term "*photosensitizer*" is used in accordance with its standard meaning to represent any substance that either increases the rate of photoinitiated polymerization or shifts the wavelength at which polymerization occurs. Photosensitizers should be used in an amount of from 0 to 25 wt.%, based on the weight of said constituent b).

The use of the compounds of Formula P1 and, optionally photosensitizers and further photo-initiators, may produce residue compounds from the (photo)chemical reaction in the final cured product. The residues may be detected by conventional analytical techniques such as: infrared, ultraviolet and NMR spectroscopy; gas or liquid chromatography; and, mass spectroscopy. Thus, the present disclosure may comprise cured matrix (co-)polymers and detectable amounts of residues from compound(s) of constituent b) and residues from any photosensitizers present. The residues are present in small amounts and do not normally interfere with the desired physiochemical properties of the final cured product.

### Additives and Adjunct Ingredients

The compositions of the present disclosure will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: catalysts; accelerators; tougheners; fillers, such as electrically conductive fillers and electrically non-conductive fillers; colorants, such as dyes or pigments; plasticizers; stabilizers including UV stabilizers; antioxidants; reactive diluents; drying agents or moisture scavengers; adhesion promoters; fungicides; flame retardants; rheological adjuvants; and/or optionally also, to a small extent, non-reactive diluents or solvents.

Such adjuvants and additives can be used in such combination and proportions as desired, provided they do not adversely affect the nature and essential properties of the composition. While exceptions may exist in some cases, these adjuvants and additives should not *in toto* comprise more than 20 wt.% of the total composition and preferably should not comprise more than 15 wt.% of the composition.

The curable composition may optionally include at least one cure accelerator. For example, the composition may comprise from comprise from 0 to 2 wt.%, for example from 0 to 1 wt.% or from 0.1 to 0.5 wt.% of said at least one cure accelerator, based on the total weight of the curable film.

Without intention to limit the present disclosure, accelerators which may find utility herein, either alone or in combination, include: metallocenes, in particular ferrocenes such as n-butyl ferrocene; saccharin; toluidines, such as N,N-dimethyl-p-toluidine, N,N-diethyl-p-toluidine; N,N-diethyl-p-toluidine (DE-p-T), N,N-dimethyl-o-toluidine (DM-o-T), N,N-dimethyl-m-toluidine (DM-m-T); indoline; 2-methylindoline; acetyl phenylhydrazine (APH); 3-carboxyacryloyl phenylhydrazine (CAPH); methyl-3-carboxyacryloyl phenylhydrazine (MCAPH); 3-carboxypropanoyl phenylhydrazine (CPPH); methylene-3-carboxypropanoyl phenylhydrazine (MCPPH); phenyl glycines and derivatives thereof, as disclosed in US Patent No. 6,897,277 (Klemarczyk); maleic acid; quinones, such as naphthaquinone and anthraquinone; quinolines such as hydroxy-1,2,3,4-tetrahydrobenzo[h]quinoline; thiocaprolactam; thioureas, in particular alkyl thioureas; and, sulfonimide and sulfonamides, as disclosed in US Patent No. 6,958,368 (Klemarczyk).

Further instructive references on suitable cure accelerators include: US Patent No. 3,218,305 (Krieble); US Patent No. 4,180,640 (Melody); US Patent No. 4,287,330 (Rich); US Patent No. 4,321,349 (Rich); US Patent No. 3,970,505 (Hauser); and, US Patent No. 6,835,762 (Klemarczyk).

The composition of the present invention may optionally comprise particulate filler. The composition may, for instance, contain from 0 to 10 wt.% or from 2 to 8 wt.% of filler, based on the weight of the composition.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have a median volume particle size (Dv50), as measured by laser diffraction, of from 0.1 to 1500 µm, for example from 1 to 1250 µm.

Exemplary fillers which may be included in the present compositions include, but are not limited to, calcium carbonate, calcium oxide, calcium hydroxide (lime powder), precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

The pyrogenic and/or precipitated silica advantageously have a BET surface area from 10 to 90 m²/g. When they are used, they do not cause any additional increase in the viscosity of the composition according to the present invention, but do contribute to strengthening the cured composition.

It is likewise conceivable to use pyrogenic and/or precipitated silica having a higher BET surface area, advantageously from 100 to 250 m²/g as a filler: because of the greater BET surface area, the effect of strengthening the cured composition is achieved with a smaller proportion by weight of silica.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics, such as PVC.

The desired viscosity of the curable composition formed may be determinative of the amount of filler used. Having regard to that latter consideration, the total amount of fillers present in the compositions should not prevent the composition from being readily applicable by the elected method of application to the composition to a substrate. For example, compositions of the present invention which are intended to be applicable to a specific locus - such as within an electronic device for instance - should possess a viscosity of from 1000 to 50,000, preferably from 10,000 to 20,000 mPas.

A "*plasticizer*" for the purposes of this disclosure is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, adipic acid, sebacic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

"*Stabilizers*" for purposes of this disclosure are to be understood as antioxidants, UV stabilizers, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzoates; cyanoacrylates; amines of the hindered amine light stabilizer (HALS) type; phosphorus; sulfur; and, mixtures thereof.

It is noted that compounds having metal chelating properties may be used in the compositions of the present disclosure to help enhance the adhesion of the cured product to a substrate surface. Further, also suitable for use as adhesion promoters are the acetoacetate-functionalized modifying resins sold by King Industries under the trade name K-FLEX XM-B301.

The presence of solvents and non-reactive diluents in the compositions of the present disclosure is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; and, aromatic hydrocarbon resins especially those containing phenol groups, such as ethoxylated or propoxylated phenols.

The above aside, it is preferred that said non-reactive diluents and solvent constitute *in toto* less than 10 wt.%, in particular less than 5 wt.% or less than 2 wt.%, based on the total weight of the composition.

### Methods and Applications

To form the defined curable compositions, the constituents are brought together and mixed. It is important that the mixing homogenously distributes the constituents within the composition: such thorough and effective mixing can be determinative of a homogeneous distribution of any particulate constituent or other adjunct material within the polymer matrix obtained following curing. The mixing conditions should occur under conditions which inhibit or prevent the reactive components from reacting: such conditions would be readily comprehended by the skilled artisan. As such, it will often be preferred that the curative elements are not mixed by hand but are instead mixed by machine - a static or dynamic mixer, for example - in predetermined amounts without intentional heating or photo-irradiation.

The compositions may be thermally cured. Whilst the selection of constituent b) will be determinative, at least in part, of the activation temperature of the composition, the temperature required to ensure a desired curing rate may be determined in each individual case by the skilled artisan, using simple preliminary tests if necessary. Without intention to limit the present disclosure, the complete curing of the curable compositions should typically occur at temperatures in the range of from 50°C to 250°C, preferably from 50°C to 200°C, and in particular from 100°C to 200°C. Of course, drying and curing at lower temperatures within the aforementioned ranges is advantageous as it obviates the requirement to substantially heat or cool the mixture from the usually prevailing ambient temperature. Where applicable, however, the temperature of the mixture formed from the respective parts of the composition may be raised above the mixing temperature using conventional means including microwave induction, ovens and drying booth. The elevated temperature may be maintained for up to 60 minutes, such as from 5 to 30 minutes, to ensure complete curing.

The curing of the composition of the present disclosure may, in certain circumstances, be conducted in an oxygen-limited environment: this may done by introducing nitrogen (N₂) gas into the curing environment, for instance. Such an environment is however not essential for the curing of the composition.

By virtue of the inclusion of constituent b) therein, the compositions of the present disclosure are also photocurable. The energy source used to initiate such photocuring of the applied compositions should emit at least one of ultraviolet (UV) radiation, infrared (IR) radiation, visible light, X-rays, gamma rays, or electron beams (e-beam). The photocurable compositions may typically be activated in less than 5 minutes, and commonly between 1 and 60 seconds - for instance between 3 and 12 seconds - when irradiated using commercial curing equipment.

Irradiating ultraviolet light should typically have a wavelength of from 150 to 600 nm and preferably a wavelength of from 200 to 450 nm. Useful sources of UV light include, for instance, extra high pressure mercury lamps, high pressure mercury lamps, medium pressure mercury lamps, low intensity fluorescent lamps, metal halide lamps, microwave powered lamps, xenon lamps, UV-LED lamps and laser beam sources, such as excimer lasers and argon-ion lasers.

Where an e-beam is utilized to cure the applied coating(s), standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to satisfactorily cure an individual composition will depend on a variety of factors including the angle of exposure to the radiation and the thickness of a given surface area of the composition. Broadly, however, a curing dosage of from 5 to 5000 mJ/cm² may be cited as being typical: curing dosages of from 50 to 500 mJ/cm², such as from 50 to 400 mJ/cm² may be considered highly effective.

The purpose of irradiation is to generate the active species from constituent b) which initiates the cure reactions. Once that species is generated, the cure chemistry is subject to the same rules of thermodynamics as any chemical reaction: the reaction rate may be accelerated by heat or retarded by lower temperatures. Without intention to limit the present disclosure, wherein the composition has been purposively irradiated to initiate curing, the complete curing of the compositions should typically occur at temperatures in the range of from 10 to 100°C, preferably from 10 to 50°C. Where applicable, the temperature of the curable compositions may be raised above the mixing temperature and / or the application temperature using conventional means, including microwave induction.

The composition of the present disclosure may find utility in composite materials, wherein the composition is combined with one or more further distinct materials: the composition may, for instance, provide a binding agent for fibers and / or particles of such composite materials. The composition may also find utility as a coating applied to a substrate or as an adhesive which bonds substrate(s) together. For completeness, exemplary substrates to which the composition of the present disclosure may be applied as a coating or as an adhesive include: lignocellulosic materials, such as chipboard, fiber board and paper; mineral building materials, such as lime- and / or cement-bonded plasters, gypsum-containing surfaces, fiber cement building materials and concrete; asphalt- and bitumen-containing pavements; glass; leather and textiles; polymeric substrates, such as polycarbonate (PC), polyethylene (PE), polypropylene (PP), liquid crystal polymer (LCP) polyamides (PA), polyetheretherketone (PEEK), polyetherimide (PEI), polyetherketoneketone (PEKK), polyetherketones (PEK), polyketone (PK), polyethylene terephthalate (PET), polybutylene terephthalate (PBT), polyimides, polyoxymethylene plastic, polyphenylene sulfide (PPS), polyphenylene oxide (PPO), phenylpropanolamine (PPA), polysulphone (PSU), polytetrafluoroethylene (PTFE / Teflon) and poly(methyl methacrylate) (PMMA); ferrous metallic materials, such as iron, stainless steel, cold-rolled steel and electro-galvanized steel; and, non-ferrous metallic materials, such as aluminium, zinc and alloys thereof.

When utilized as a coating or adhesive, the above described composition will commonly be applied to the substrate(s) then cured *in situ.* Prior to applying the composition, it is often advisable to pre-treat the relevant substrate surfaces to remove foreign matter there from: this step can, if applicable, facilitate the subsequent adhesion of the composition thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water.

In some embodiments, the adhesion of the composition of the present disclosure to the preferably pre-treated substrate may be facilitated by the application of a primer thereto. Indeed primer compositions may be necessary to ensure efficacious fixture and / or cure times of the compositions on inactive substrates. The skilled artisan will be able to select an appropriate primer.

The composition is then applied to the optionally pre-treated, optionally primed surfaces of the substrate by conventional application methods such as: printing methods, including screen printing; pin transfer; and, syringe application, including by electro-pneumatically controlled syringes. It is recommended that the composition be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The following examples are illustrative of the present disclosure and are not intended to limit the scope of the disclosure in any way.

### Examples

The following commercial compounds are utilized in the Examples.

| | |
|---|---|
| Ebercyl 4858: | Urethane acrylate oligomer, available from Daicel-Allnex Ltd. |
| Epoxyester 3000A: | Epoxy acylate oligomer, available from Kyoeisha Chemical Co. Ltd. |
| BTTB: | 3,3',4,4'-Tetra(t-butyl peroxycarbonate) benzophenone, available from Amadis Chemical Company Limited. |

The remaining compounds of the Examples may be obtained from Sigma Aldrich.

The ingredients listed in Table 1 below were combined and admixed using a Flacktec speed mixer to form a homogenous mixture. For completeness, the given percentages by weight (wt.%) of Table 1 are based on the composition *in toto.*

**Table 1**

| **Ingredients** | **Example 1 (wt.%)** | **Example 2 (wt.%)** |
|---|---|---|
| Ebercyl 4858 | 84.5 | |
| Epoxyester 3000A | | 79.5 |
| BTTB | 0.5 | 0.5 |
| Trimethylolpropane triacrylate | 15.0 | 20.0 |

The following procedures and tests were used to evaluate the tabulated compositions:
Gel Time: The gel time (*seconds*) of 1g by weight of each composition was determined at 180°C and 50% Relative Humidity (RH) using a Gardner Standard Model Gel Timer.
UV Fixture Time: This parameter is defined as the light exposure time required to develop a shear strength of 0.1 N/mm² for samples of 1g by weight of each composition applied to glass microscope slides. The fixture time (*seconds*) was determined under ultraviolet irradiation (*wavelength: 365 nm*) at 100 mW/cm² from a High Pressure Mercury Lamp.
Shore D Hardness: This hardness parameter was determined by pressing a hand-held durometer (*Zwick* 3131) onto a sample (≥ *6 mm thickness; 3 seconds contact time before measurement*) in accordance with DIN ISO 7619-1. The Shore D hardness was recorded immediately after curing under each of the following conditions: i) thermal curing at 180°C for either 10 minutes (*Example 1*) or 20 minutes (*Example 2*); and ii) irradiative curing under ultraviolet irradiation (*wavelength: 365 nm*) for 60 seconds at 100 mW/cm² from a High Pressure Mercury Lamp.

The results of the aforementioned tests are provided in Table 2 below. The results demonstrate that each composition can be cured effectively under both thermal curing and irradiative curing. Further, the cured compositions demonstrate good hardness irrespective of the curing regimen.

**Table 2**

| **Test** | **Example 1** | **Example 2** |
|---|---|---|
| Gel Time at 180°C (s) | 6 | 6 |
| UV Fixture Time (s) | 1 | 1 |
| Shore D Hardness, Thermal Cure | 81 | 80 |
| Shore D Hardness, UV Cure | 82 | 80 |

In view of the foregoing description and examples, it will be apparent to those skilled in the art that equivalent modifications thereof can be made without departing from the scope of the claims.

## Claims

1. A composition comprising:
a) an ethylenically unsaturated monomer constituent comprising:
a1) at least one (meth)acrylate-functionalized macromonomer having a weight average molecular weight (Mw) of from 1000 to 100000 daltons; and,
a2) at least one monomer having at least two ethylenically unsaturated groups and having a weight average molecular weight (Mw) of at most 600 Daltons; and,
b) at least one ester peroxide in accordance with Formula P1: 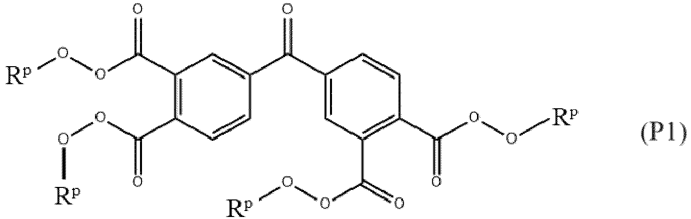 wherein: R^{p} is C₁-C₁₂ alkyl, C₆-C₁₈ aryl, C₇-C₁₈ aralkyl or C₇-C₁₈ alkaryl.

2. The composition according to claim 1 comprising, based on the weight of the composition:
from 10 to 90 wt.% of a1) said at least one (meth)acrylate-functionalized macromonomer having a weight average molecular weight (Mw) of from 1000 to 100000 daltons;
from 5 to 40 wt.% of a2) said at least one monomer having at least two ethylenically unsaturated groups and having a weight average molecular weight (Mw) of at most 600 Daltons; and,
from 0.05 to 5 wt.% of b) said at least one ester peroxide in accordance with Formula P1.

3. The composition according to claim 1 comprising, based on the weight of the composition:
from 15 to 90 wt.%, preferably from 30 to 90 wt.% of a1) said at least one (meth)acrylate-functionalized macromonomer;
5 to 25 wt.%, preferably from 10 to 25 wt.% of a2) said at least one monomer having at least two ethylenically unsaturated groups and having a weight average molecular weight (Mw) of at most 600 Daltons; and,
from 0.1 to 2 wt.%, preferably from 0.1 to 1 wt.% of b) said at least one ester peroxide in accordance with Formula P1.

4. The composition according to any one of claims 1 to 3, wherein the or each (meth)acrylate functionalized macromonomer: i) has two or more (meth)acrylate functional groups per molecule; and / or, ii) has a weight average molecular weight (Mw) of from 1000 to 10000 daltons.

5. The composition according to any one of claims 1 to 4, wherein a1) said at least one (meth)acrylate functionalized macromonomer is chosen from: (meth)acrylate-functionalized urethane macromonomers; epoxy (meth)acrylate oligomers; (meth)acrylate-functionalized polybutadienes; (meth)acrylic polyol (meth)acrylates; polyester (meth)acrylate macromonomers; polyamide (meth)acrylate macromonomers; polyurea (meth)acrylate macromonomers; polyether (meth)acrylate macromonomers; and, mixtures thereof.

6. The composition according to any one of claims 1 to 5, wherein constituent a1) comprises or consists of at least one urethane (meth)acrylate oligomer having a weight average of molecular weight (Mw) of from 1000 to 10000 and a (meth)acrylate functionality of from 1 to 3.

7. The composition according to any one of claims 1 to 5, wherein constituent a1) comprises or consists of at least one epoxy (meth)acrylate oligomer having: a weight average molecular weight (Mw) of from 1000 to 10000 daltons; and, an equivalent weight of the total of epoxide and (meth)acrylate groups of from 100 to 700 g/eq.

8. The composition according to any one of claims 1 to 7, wherein constituent a2) comprises or consists of at least one tri(meth)acrylate of a trihydric polyol.

9. The composition according to claim 8, wherein constituent a2) comprises trimethylolpropane triacrylate (TMPTA) and / or pentaerythritol triacrylate (PETIA).

10. The composition according to any one of claims 1 to 9, wherein in Formula P1, R^{p} is C₁-C₁₂ alkyl, preferably C₃-C₈ alkyl.

11. The composition according to any one of claims 1 to 9, wherein constituent b) comprises or consists of at least one compound chosen from: 3,3',4,4'-tetrakis(t-butyl peroxycarbonyl)benzophenone; 3,3',4,4'-tetrakis(t-amyl peroxycarbonyl)benzophenone; 3,3',4,4'-tetrakis(t-hexyl peroxycarbonyl)benzophenone; 3,3',4,4'-tetrakis(t-octyl peroxycarbonyl)benzophenone; 3,3',4,4'- tetrakis(cumyl peroxycarbonyl)benzophenone; and, mixtures thereof.

12. The composition according to any one of claims 1 to 9, wherein constituent b) comprises or consists of 3,3',4,4'-tetrakis(t-butyl peroxycarbonyl)benzophenone.

13. A cured product obtained from the composition as defined in any one of claims 1 to 12.

14. Use of the cured product as defined in claim 13 as a coating, adhesive or sealant or as a matrix of a composite material.

15. A method of curing a composition as defined in any one of claims 1 to 12, said method comprising:
i) exposing said composition to actinic radiation, preferably ultraviolet radiation having a wavelength of from 150 to 600 nm, more preferably from 200 to 450 nm; and / or,
ii) heating said composition to a temperature of from 50°C to 250°C, preferably from 50°C to 200°C, more preferably from 100°C to 200°C.

16. The method of claim 15, wherein said composition is exposed to actinic radiation at a dosage of from 5 to 5000 mJ/cm².
